(19) Europäisches Patentamt
European Patent Office
Office européen des brevets

(11) EP 3 057 056 A1

(12) EUROPEAN PATENT APPLICATION
published in accordance with Art. 153(4) EPC

(43) Date of publication:
17.08.2016 Bulletin 2016/33

(51) Int Cl.:
G06Q 30/02 (2012.01)   G06Q 30/06 (2012.01)

(21) Application number: 14852547.0

(22) Date of filing: 08.10.2014

(86) International application number:
PCT/KR2014/009487

(87) International publication number:
WO 2015/053562 (16.04.2015 Gazette 2015/15)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 08.10.2013 KR 20130120093
14.01.2014 KR 20140004774

(71) Applicant: Youn, Chi Moon
Busan 614-836 (KR)

(72) Inventor: Youn, Chi Moon
Busan 614-836 (KR)

(74) Representative: Zardi, Marco
M. Zardi & Co. SA
Via Pioda 6
6900 Lugano (CH)

(54) METHOD, SYSTEM, AND COMPUTER-READABLE RECORDING MEDIUM FOR PROVIDING ELECTRONIC COMMERCE CONSUMER WITH MONETARY BENEFITS IN LARGE AMOUNTS

(57) According to one aspect of the present invention, provided is a method for providing an electronic commerce consumer with monetary benefits in large amounts, the method comprising the steps of: receiving consumer information from a consumer terminal device and generating an account of a consumer on the basis of the received consumer information; determining benefits to be provided with regard to the account of the consumer, on the basis of information on purchase of a product by the consumer; and matching a refund corresponding to at least some of the determined benefits to the consumer, wherein the refund is realized sequentially in a delayed manner.

FIG. 2

200

**Description**

FIELD OF THE INVENTION

The present invention relates to a method, a system, and a computer-readable recording medium for providing an electronic commerce consumer with monetary benefits in quantity.

BACKGROUND

Due to the widespread availability of wired/wireless communication networks including the Internet and terminal devices capable of wired/wireless communication (e.g., personal computers, smartphones, etc.), electronic commerce (e-commerce) via the communication networks and the consumer terminal devices is more and more thriving. As time goes on, the e-commerce is becoming pivotal for entire commercial transactions.

Naturally, many enterprises and individuals are thus participating and engaging in e-commerce activities. Those engaging in e-commerce necessarily provide consumers with a variety of inducements such as discount benefits, discount coupons, complimentary tickets, refundable or non-refundable cash points, and complimentary products. (Meanwhile, the term, "products" herein encompasses intangible items such as services.)

However, such consumer inducements have been passive and short-sighted ones such as a discount of 10% of a selling price, cash points equivalent to 2% of a selling price, and a very cheap complimentary product offered together when selling an expensive product. This situation has been inordinately unfair to consumers, and also excessively biased towards the profits of enterprises mainly handling production or distribution, considering that production costs (e.g., costs corresponding to expenses incurred by producers in producing products plus appropriate profits of the producers) and distribution costs (e.g., wholesale costs) of various consumptive products still sum to merely several to tens of percent (less than 50% in most cases) of retail prices thereof.

Meanwhile, although consumers have been recently offered inducements like a discount of 50% by social commerce, such a one-off discount inevitably involves problems including inhospitality of providers, deterioration in quality of products and the like, and even the burden of commissions of social commerce enterprises has been passed on to consumers or small-scale providers.

In order to address the above situation, the inventor(s) present herein a novel technique for providing an electronic commerce consumer with monetary benefits in quantity.

Meanwhile, Korean Patent Application No. 2004-98608 has disclosed an invention to generate accumulated points equivalent to an amount of purchase of a product made by a consumer, which is seemingly similar to the technical idea of the present invention. However, this invention is inferior to the present invention in terms of structural elaborateness or feasibility, because the former allows the consumer to receive benefits only after a quite long time since the consumer has previously acquired a membership by paying a large amount of money.

SUMMARY OF THE INVENTION

One object of the present invention is to solve all the above problems in prior art.

Another object of the invention is to provide an electronic commerce consumer with monetary benefits in quantity.

Yet another object of the invention is to turn the current producer or distributor-centered e-commerce market into a more neutral one.

Still another object of the invention is to contrive a most exceptional consumer inducement.

According to one aspect of the invention to achieve the objects as described above, there is provided a method for providing an electronic commerce consumer with monetary benefits in quantity, the method comprising the steps of: receiving information on a consumer from a consumer terminal device and creating an account of the consumer on the basis of the received consumer information, wherein the consumer information includes at least some of a name, resident registration number, telephone number, mobile phone number, address, e-mail account, login ID, nickname, password and financial account information of the consumer; determining benefits to be granted with regard to the account of the consumer on the basis of information on product purchase of the consumer, wherein the product purchase information includes at least some of time of purchase, identification information, prime cost information, and retail price information of a product, and at least some of the determined benefits are refundable cash points; and matching a refund corresponding to the at least some of the determined benefits with the consumer, wherein the refund is realized in a sequentially delayed manner.

In addition, there are further provided other methods and systems to implement the invention, as well as computer-readable recording media having stored thereon computer programs for executing the methods.

According to the invention, all the above-described problems in prior art are solved.

According to the invention, an electronic commerce consumer may be provided with monetary benefits in quantity.

According to the invention, the current producer or distributor-centered e-commerce market may be turned into a more neutral one.

According to the invention, a most exceptional consumer inducement is contrived.

BRIEF DESCRIPTION OF THE DRAWINGS

FIG. 1 is a schematic diagram showing the configuration of an entire system for providing an electronic commerce consumer with monetary benefits in quantity according to one embodiment of the invention.

FIG. 2 is a detailed diagram showing the internal configuration of a benefit provision system 200 according to one embodiment of the invention.

DETAILED DESCRIPTION OF THE PREFERRED EMBODIMENTS

In the following detailed description of the present invention, references are made to the accompanying drawings that show, by way of illustration, specific embodiments in which the invention may be practiced. These embodiments are described in sufficient detail to enable those skilled in the art to practice the invention. It is to be understood that the various embodiments of the invention, although different from each other, are not necessarily mutually exclusive. For example, specific shapes, structures and characteristics described herein may be implemented as modified from one embodiment to another without departing from the spirit and scope of the invention. Furthermore, it shall be understood that the locations or arrangements of individual elements within each of the embodiments may also be modified without departing from the spirit and scope of the invention. Therefore, the following detailed description is not to be taken in a limiting sense, and the scope of the invention is to be taken as encompassing the scope of the appended claims and all equivalents thereof. In the drawings, like reference numerals refer to the same or similar elements throughout the several views.

Hereinafter, various preferred embodiments of the present invention will be described in detail with reference to the accompanying drawings to enable those skilled in the art to easily implement the invention.

Configuration of an entire system

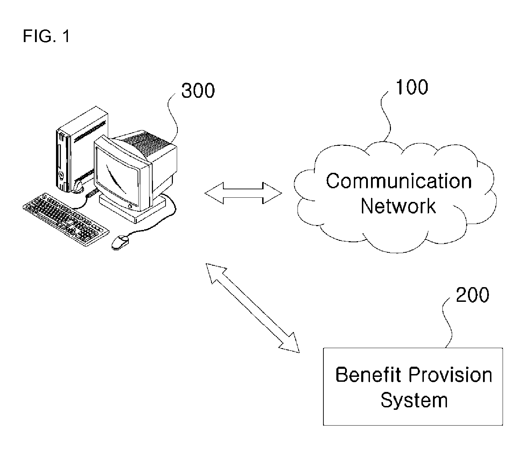

FIG. 1 is a schematic diagram showing the configuration of an entire system for providing an electronic commerce consumer with monetary benefits in quantity according to one embodiment of the invention.

As shown in FIG. 1, the entire system according to one embodiment of the invention may comprise a communication network 100, a benefit provision system 200 and a consumer terminal device 300.

First, the communication network 100 according to one embodiment of the invention may be implemented regardless of communication modality such as wired and wireless communications, and may be constructed from a variety of communication networks such as local area networks (LANs), metropolitan area networks (MANs), and wide area networks (WANs). Preferably, the communication network 100 described herein may be the Internet or the World Wide Web (WWW). However, the communication network 100 is not necessarily limited thereto, and may at least partially include known wired/wireless data communication networks, known telephone networks, or known wired/wireless television communication networks.

Next, the benefit provision system 200 according to one embodiment of the invention may provide an electronic commerce consumer (i.e., an account of the e-commerce consumer) with monetary benefits in quantity. The configuration and function of the benefit provision system 200 according to the invention will be discussed in detail below.

Next, the consumer terminal device 300 according to one embodiment of the invention is digital equipment that may function to connect to and then communicate with the benefit provision system 200, and any type of digital equipment having memory means and a microprocessor for computing capabilities, such as a desktop computer, a notebook computer, a workstation, a personal digital assistant (PDA), a web pad (e.g., a smart pad), a mobile phone (e.g., a smartphone) and wearable equipment (e.g., a smart watch, smart glass, etc.), may be adopted as the consumer terminal device 300 according to the invention.

Particularly, the consumer terminal device 300 may include a browser program (not shown) or other application programs (not shown) to allow a consumer to utilize electronic commerce. Examples of the browser program may include well-known Internet browsers, and examples of the other application programs may include well-known mobile shopping applications or ActiveX-based programs for supporting electronic payments. However, the programs are not necessarily limited to these examples.

Configuration of the benefit provision system

Hereinafter, the internal configuration of the benefit provision system 200 according to the invention and the functions of the respective components thereof will be discussed.

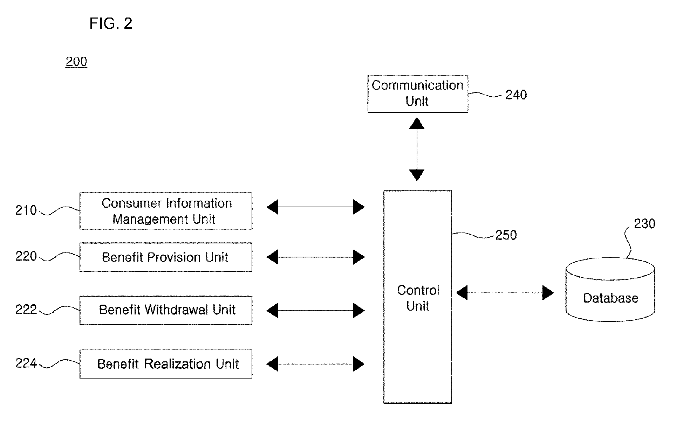

FIG. 2 is a detailed diagram showing the internal configuration of the benefit provision system 200 according to one embodiment of the invention.

The benefit provision system 200 according to one embodiment of the invention may be digital equipment having memory means and a microprocessor for computing capabilities. The benefit provision system 200 may be a server system. As shown in FIG. 2, the benefit provision system 200 may comprise a consumer information management unit 210, a benefit provision unit 220, a benefit withdrawal unit 222, a benefit realization unit 224, a database 230, a communication unit 240, and a control unit 250. According to one embodiment of the invention, at least some of the consumer information management unit 210, the benefit provision unit 220, the benefit withdrawal unit 222, the benefit realization unit 224, the database 230, the communication unit 240, and the control unit 250 may be program modules to communicate with the consumer terminal device 300. The program modules may be included in the benefit provision system 200 in the form of operating systems, application program modules or other program modules, while they may be physically stored on a variety of commonly known storage devices. Further, the program modules may also be stored in a remote storage device that may communicate with the benefit provision system 200. Meanwhile, such program modules may include, but not limited to, routines, subroutines, programs, objects, components, data structures and the like for performing specific tasks or executing specific abstract data types as will be described below in accordance with the invention.

First, the consumer information management unit 210 according to one embodiment of the invention may function to receive consumer information from the consumer terminal device 300 and create/manage an account of a consumer on the basis of the received consumer information. The consumer information management unit 210 may be similar to commonly known consumer information management program modules (not shown) which are widely used in conventional electronic commerce. Here, the consumer information may include at least some of a name, resident registration number, telephone number, mobile phone number, address, e-mail account, login ID, nickname, password, financial account information and the like of the consumer. Further, the account of the consumer may be a data set including the above consumer information and information on monetary benefits to be provided for the consumer as will be described below (i.e., time (date, hour, etc.) of sale (or purchase) based on which benefits are generated, amount of benefits, type of benefits (e.g., refundable cash points, non-refundable cash points, etc.), and the like). (The monetary benefits may preferably be refundable (i.e., cash-refundable) cash points. Of course, only a part of the entire monetary benefits may be refundable cash points, and the remainder may be cash points that may be used only in purchasing other products.) The account of the consumer may be stored in the database 230 to be described below.

Next, the benefit provision unit 220 according to one embodiment of the invention may function to, when a consumer purchases a product using the terminal device 300 or other means (e.g., another terminal device (not shown) or traditional means like a legacy wired/wireless telephone only connecting to a telephone network, a facsimile, etc.) of the consumer, grant benefits corresponding to the purchase with regard to an account of the consumer (i.e., provide the benefits to the consumer). The provision of benefits will be discussed in detail below.

First, the benefit provision unit 220 may determine the amount of benefits to be provided.

To this end, information on product purchase of the consumer, based on which the provided benefits are generated, may be consulted. The product purchase information may be stored in the database 230. Examples of the information may include: time of purchase, identification information (e.g., including brand, model number, manufacturer, provider, place of origin, color, and other attributes), prime cost (or first cost) information (e.g., prime cost information from the perspective of an operator of the benefit provision system 200 or an e-commerce trader using the benefit provision system 200), information on a retail price commonly quoted by e-commerce traders, information on a retail price of a specific e-commerce trader (e.g., an operator using the benefit provision system 200 or a competitor of the e-commerce trader), and the like of the product.

The above product purchase information may be used in determining the amount of benefits to be provided to the consumer in connection with the purchase of the corresponding product by the consumer. For example, the provided benefits may be as follows:

(i) If a prime cost of the product is equal to or less than 30 percent of a common retail price or a retail price of a specific e-commerce trader of the product, then cash points equivalent to 100 percent of a selling price of the product purchased by the consumer may be granted with regard to an account of the consumer.

(ii) If the prime cost of the product is from 31 to 45 percent of the common retail price or the retail price of the specific e-commerce trader of the product, then cash points equivalent to 80 percent of the selling price of the product purchased by the consumer may be granted with regard to the account of the consumer.

(iii) If the prime cost of the product is from 46 to 55 percent of the common retail price or the retail price of the specific e-commerce trader of the product, then cash points equivalent to 60 percent of the selling price of the product purchased by the consumer may be granted with regard to the account of the consumer.

(iv) If the prime cost of the product is from 56 to 65 percent of the common retail price or the retail price of the specific e-commerce trader of the product, then cash points equivalent to 40 percent of the selling price of the product purchased by the consumer may be granted with regard to the account of the consumer.

(v) If the prime cost of the product is from 66 to 75 percent of the common retail price or the retail price of the specific e-commerce trader of the product, then cash points equivalent to 20 percent of the selling price of the product purchased by the consumer may be granted with regard to the account of the consumer.

The above may be expressed as a more generalized equation as follows:

$$\text{(Amount of the provided benefits)} = \text{(Selling price of the corresponding product)} \times n\ \% \qquad \text{(Eq. 1)}$$

(Here, n is a percentage number equal to or less than 100, and the value of n tends to decrease with the increase of the value of a prime cost of the product divided by a common retail price or a retail price of a specific e-commerce trader of the product (i.e., a cost ratio).)

Meanwhile, the allocation of type of the provided benefits may also be determined on the basis of the above cost ratio or overall cost ratios of other products.

Next, the benefit provision unit 210 may provide the consumer with the determined amount of benefits.

For example, if a prime cost of a garment product is 15 percent of a common retail price thereof and a selling price thereof is 100,000 won, then the benefits provided to the consumer in connection with the garment product may be cash points equivalent to the full amount of 100,000 won. For another example, if a prime cost of a bag product is 35 percent of a common retail price thereof and a selling price thereof is 700,000 won, then the benefits provided to the consumer in connection with the bag product may be cash points equivalent to 560,000 won (700,000 won x 80%). For yet another example, if a prime cost of a specialty sports product is 50 percent of a common retail price thereof and a selling price thereof is 1,000,000 won, then the benefits provided to the consumer in connection with the specialty sports product may be cash points equivalent to 600,000 won (1,000,000 won x 60%).

According to the invention, when a consumer purchases a product, benefits having a monetary value corresponding to all or a fairly large part of a selling price of the product may be provided to the consumer, as described above. In this case, the sum of a prime cost of the product and the nominal monetary value of the benefits may often exceed the selling price of the product. However, the inventor(s) intend the invention not only to serve for the common good but also to be reasonable, by means of withdrawal and delayed realization of benefits to be described below.

Next, the benefit withdrawal unit 222 may function to, when the consumer spends at least some of the provided benefits to further purchase other products than the product based on which the benefits have been generated, withdraw the benefits. In other words, when the consumer spends the benefits granted with regard to the consumer's account to purchase other products, the benefit withdrawal unit 222 may reduce the amount of the benefits of the consumer's account.

It will be discussed with a more specific example. If a consumer A purchases a garment product, the cost ratio of which is merely 15%, for 100,000 won, then the consumer A may be provided with benefits having a value of 100,000 won, according to the above example. (This is the case in which so-called 100% cashback is achieved.) However, due to the delayed realization of the benefits by the benefit realization unit 224 to be described below, the consumer A may desire to spend the provided benefits equivalent to 100,000 won to further purchase another product with a retail price of 60,000 won, rather than desire the benefits to be realized as a refund. (Actually, in view of the results of related simulations, it has been estimated that there are much more consumers who desire to spend the provided benefits to further purchase other products than those who desire the benefits to be all realized as a refund even if it takes a long time.) In this case, the benefit withdrawal unit 222 may withdraw 60,000 won worth of benefits from the benefits worth 100,000 won which have been provided to the consumer A. Accordingly, only the benefits worth 40,000 won may remain in the account of the consumer A. (Meanwhile, in connection with the purchase of the 60,000 won product made by spending the benefits, it may not be necessary to further provide new benefits.)

The above measures of the benefit withdrawal unit 222 may allow an operator of the benefit provision system 200 according to the invention, or an e-commerce trader using the benefit provision system 200, to prevent unduly excessive benefits from being accumulated.

Meanwhile, only when the consumer spends the benefits to additionally purchase another product rather than gets the benefits to be realized as a refund as described above, the benefit withdrawal unit 222 may cause the benefits to be reduced and applied according to a cost ratio of the other product. Applying the reduced benefits may imply that even when the consumer spends benefits usually having a fixed nominal value, the benefits are adjusted to have a lower value if the benefits are used in the purchase of another product having a high cost ratio. Examples of the value of the benefits, which is adjusted according to the cost ratio of the product additionally purchased with the benefits according to the invention, may be as follows:

(i) If a product having a cost ratio equal to or less than 30% is additionally purchased by spending refundable benefits, then the value of the benefits used in the purchase may not be adjusted.

(ii) If a product having a cost ratio from 31% to 45% is additionally purchased by spending refundable benefits, then the value of the benefits used in the purchase may be reduced by 30%.

(iii) If a product having a cost ratio from 46% to 55% is additionally purchased by spending refundable benefits, then the value of the benefits used in the purchase may be reduced by 35%.

(iv) If a product having a cost ratio from 56% to 65% is additionally purchased by spending refundable benefits, then the value of the benefits used in the purchase may be reduced by 40%.

(v) If a product having a cost ratio from 66% to 75% is additionally purchased by spending refundable benefits, then the value of the benefits used in the purchase may be reduced by 45%.

Meanwhile, in order to encourage the consumer to quickly spend the refundable benefits rather than get the benefits to be actually realized as a refund, the benefit withdrawal unit 222 may communicate with a server (not shown) of an affiliated offline store to allow the consumer to use a part of a considerable amount of the benefits like cash when purchasing another product in the store, with no need for the passage of time. For the above purchase, the benefit withdrawal unit 222 may convert the remaining part of the benefits into non-refundable benefits. That is, for example, if a consumer purchase a product having a cost ratio of 15% for 100,000 won in cash, then the consumer may get 46,855.9 won worth of benefits (to be described below with reference to Table 1) to be refunded in cash after spending about six months. However, the consumer may also immediately spend a part (e.g., 60 percent (= 28,113.54 won)) of the refundable benefits among the benefits worth 100,000 won, which have been generated just after the purchase of the product, to promptly purchase another product in the affiliated offline store, and may instead get the remaining refundable benefits worth 18,742.36 won to be converted into non-refundable benefits.

Next, the benefit realization unit 224 according to one embodiment of the invention may function to allow a consumer to spend at least some of benefits provided to the consumer so that a refund may be realized. To this end, when the consumer requests a refund using the terminal device 300 or the like of the consumer, the benefit realization unit 224 may match the refund with financial account information or the like, which has been previously registered by the consumer.

However, the above benefit realization proceeds in a delayed manner. This will be discussed in detail below.

When providing benefits according to the invention, the amount thereof may be actually much greater than in general cases. Thus, if the consumer desires at least some of the provided benefits to be realized as a refund, the benefit realization unit 224 may place an appropriate limit on the timing of the realization of the benefits. That is, if benefits equivalent to n% of a selling price of a product have been provided, then the benefit realization unit 224 may allow m1%, m2%, m3% and the like of the remainder of the benefits generated in connection with the product to be respectively realized at t1, t2, t3 and the like from the time of sale of the product.

For example, if a consumer purchases a product so that benefits worth 100,000 won are provided on October 1, 2014, then refunds may be realized after each month, i.e., on or after the first day of each month, and the amount of the respective benefits that may be refunded at the corresponding time may be 10% of the remainder of the benefits generated in connection with the purchased product. Accordingly, the consumer may receive 10,000 won on November 1, 2014, 9,000 won on December 1, and 8,100 won on January 1 of the next year. Of course, the consumer may continuously receive cash equivalent to 10% of the remainder of the benefits even on or after February 1.

The above-described delay of benefit realization may act to: (i) induce a consumer to spend more time on an e-commerce site (e.g., an online shopping mall or marketplace) of an operator of the benefit provision system 200 according to the invention or an e-commerce trader using the benefit provision system 200; and (ii) induce a consumer to spend benefits provided to the consumer on another good product before the benefits are simply refunded, so that healthy consumption may be facilitated.

The following table illustrates one example of the provision and realization of benefits to enable the invention not only to serve for the common good but also to be reasonable.

Table 1

| Date (Event) | Refund for consumer (each month) (Unit: won) | Remaining sales profit (Unit: won) |
|---|---|---|
| 2014. 09. 01. (Sale) | 0 | 85,000 |
| 2014. 10. 01. | 10,000 | 75,000 |
| 2014. 11. 01. | 9,000 | 66,000 |
| 2014. 12. 01. | 8,100 | 57,900 |
| 2015. 01. 01. | 7,290 | 50,610 |
| 2015. 02. 01. | 6,561 | 44,049 |
| 2015. 03. 01. | 5,904.9 | 38,144.1 |
| 2015. 04. 01. (Discontinuance of refund) | 0 | 38,144.1 |
| 2015. 04. 02. (or any date from 2014. 09. 01.) (The remaining benefits may be used in purchasing another 53,144.1 won product having a cost ratio of 15%.) | 0 | 30,172.485 |

Here, the cost ratio of the product is 15%; the selling price thereof is 100,000 won; n = 100; among cash points as the benefits, the percentage of refundable ones is up to 50%; 10% of the remainder of the benefits are refunded each month; and the consumer is assumed to be the most patient.

That is, according to the above table, a user of the benefit provision system 200 may provide 100% cashback to the consumer, while the user may receive 100,000 won for the sale of two 153,144.1 won products, and after about seven months, may make a net profit of 30,172.485 won (without considering financial gain). Meanwhile, the consumer may spend only 53,144.1 won to benefit by a product worth as much as 153,144.1 won.

Next, the database 230 according to one embodiment of the invention may store a variety of information as described above. Although FIG. 2 shows that the database 230 is incorporated in the benefit provision system 200, the database 230 may be configured separately from the benefit provision system 200 as needed by those skilled in the art to implement the invention. Meanwhile, the database 230 according to the invention encompasses a computer-readable recording medium, and may refer not only to a database in a narrow sense but also to a database in a broad sense including file system-based data records and the like. The database 230 according to the invention may be even a collection of simple logs if one can search and retrieve data from the collection.

Next, the communication unit 240 according to one embodiment of the invention may function to enable data transmission/receipt to/from the consumer information management unit 210, the benefit provision unit 220, the benefit withdrawal unit 222, the benefit realization unit 224, and the database 230.

Lastly, the control unit 250 according to one embodiment of the invention may function to control data flow among the consumer information management unit 210, the benefit provision unit 220, the benefit withdrawal unit 222, the benefit realization unit 224, the database 230, and the communication unit 240. That is, the control unit 250 according to the invention may control data flow into/out of the benefit provision system 200 or data flow among the respective components of the benefit provision system 200, such that the consumer information management unit 210, the benefit provision unit 220, the benefit withdrawal unit 222, the benefit realization unit 224, the database 230, and the communication unit 240 may carry out their particular functions, respectively.

The embodiments according to the invention as described above may be implemented in the form of program instructions that can be executed by various computer components, and may be stored on a computer-readable recording medium. The computer-readable recording medium may include program instructions, data files, data structures and the like, separately or in combination. The program instructions stored on the computer-readable recording medium may be specially designed and configured for the present invention, or may also be known and available to those skilled in the computer software field. Examples of the computer-readable recording medium include the following: magnetic media such as hard disks, floppy disks and magnetic tapes; optical media such as compact disk-read only memory (CD-ROM) and digital versatile disks (DVDs); magneto-optical media such as floptical disks; and hardware devices such as read-only memory (ROM), random access memory (RAM) and flash memory, which are specially configured to store and execute program instructions. Examples of the program instructions include not only machine language codes created by a compiler or the like, but also high-level language codes that can be executed by a computer using an interpreter or the like. The above hardware devices may be changed to one or more software modules to perform the processes of the present invention, and vice versa.

Although the present invention has been described in terms of specific items such as detailed elements as well as the limited embodiments and the drawings, they are only provided to help more general understanding of the invention, and the present invention is not limited to the above embodiments. It will be appreciated by those skilled in the art to which the present invention pertains that various modifications and changes may be made from the above description.

Therefore, the spirit of the present invention shall not be limited to the above-described embodiments, and the entire scope of the appended claims and their equivalents will fall within the scope and spirit of the invention.

**Claims**

1. A method for providing an electronic commerce consumer with monetary benefits in quantity, the method being implemented in a benefit provision system comprising a consumer information management unit, a benefit provision unit and a benefit realization unit, and comprising the steps of:

   in the consumer information management unit, receiving information on a consumer from a consumer terminal device and creating an account of the consumer on the basis of the received consumer information, wherein the consumer information includes at least some of a name, resident registration number, telephone number, mobile phone number, address, e-mail account, login ID, nickname, password and financial account information of the consumer;

   in the benefit provision unit, determining benefits to be granted with regard to the account of the consumer on the basis of information on product purchase of the consumer, wherein the product purchase information includes at least some of time of purchase, identification information, prime cost information, and retail price information of a product, and at least some of the determined benefits are refundable cash points; and

   in the benefit realization unit, matching a refund corresponding to the at least some of the determined benefits with the consumer,

   wherein the amount of the determined benefits is adjusted according to a cost ratio of the product,

   only a part of the determined benefits are refundable cash points and the remainder thereof are non-refundable cash points,

   the refund is realized in a sequentially delayed manner, and

   the sequential realization of the refund comprises causing m1% of the refund to be realized at t1 from the time of purchase of the product, causing m2% of the refund to be realized at t2 from the time of purchase of the product, and causing m3% of the refund to be realized at t3 from the time of purchase of the product, where m1, m2 and m3 (m1 > m2 > m3) are positive numbers representing percentages, and t1, t2 and t3 (t1 < t2 < t3) are positive numbers representing fixed periods of time, respectively.

2. The method of Claim 1, wherein the refundable cash points are capable of being spent for purchase of another product by the consumer.

3. The method of Claim 1, wherein the refundable cash points are capable of being spent for purchase of another product by the consumer in an affiliated offline store, in which case the remainder of the refundable cash points are converted into non-refundable cash points.

4. A system for providing an electronic commerce consumer with monetary benefits in quantity, comprising:

   a consumer information management unit for receiving information on a consumer from a consumer terminal device and creating an account of the consumer on the basis of the received consumer information, wherein the consumer information includes at least some of a name, resident registration number, telephone number, mobile phone number, address, e-mail account, login ID, nickname, password and financial account information of the consumer;

   a benefit provision unit for determining benefits to be granted with regard to the account of the consumer on the basis of information on product purchase of the consumer, wherein the product purchase information includes at least some of time of purchase, identification information, prime cost information, and retail price information of a product, and at least some of the determined benefits are refundable cash points; and

   a benefit realization unit for matching a refund corresponding to the at least some of the determined benefits with the consumer,

   wherein the amount of the determined benefits is adjusted according to a cost ratio of the product,

   only a part of the determined benefits are refundable cash points and the remainder thereof are non-refundable cash points,

the refund is realized in a sequentially delayed manner, and

the sequential realization of the refund comprises causing m1% of the refund to be realized at t1 from the time of purchase of the product, causing m2% of the refund to be realized at t2 from the time of purchase of the product, and causing m3% of the refund to be realized at t3 from the time of purchase of the product, where m1, m2 and m3 (m1 > m2 > m3) are positive numbers representing percentages, and t1, t2 and t3 (t1 < t2 < t3) are positive numbers representing fixed periods of time, respectively.

5. The system of Claim 4, wherein the refundable cash points are capable of being spent for purchase of another product by the consumer.

6. A computer-readable recording medium having stored thereon a computer program for executing the method of any one of Claims 1 to 3.

FIG. 1

300

100

Communication
Network

200

Benefit Provision
System

FIG. 2

## INTERNATIONAL SEARCH REPORT

International application No.

**PCT/KR2014/009487**

### A. CLASSIFICATION OF SUBJECT MATTER

***G06Q 30/02(2012.01)i, G06Q 30/06(2012.01)i***

According to International Patent Classification (IPC) or to both national classification and IPC

### B. FIELDS SEARCHED

Minimum documentation searched (classification system followed by classification symbols)
G06Q 30/02; G06Q 30/00; G06Q 30/06

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: benefit, compensation, point, refund, cache, price, production cost, commodity, ratio, viewpoint, progress

### C. DOCUMENTS CONSIDERED TO BE RELEVANT

| Category* | Citation of document, with indication, where appropriate, of the relevant passages | Relevant to claim No. |
|---|---|---|
| A | KR 10-2002-0011207 A (CASH BACK MALL CO., LTD.) 08 February 2002<br>See abstract, claims 4-5 and figures 1-7. | 1-6 |
| A | KR 10-2001-0094624 A (SK INNOVATION CO., LTD.) 01 November 2001<br>See abstract, claims 1-4 and figures 1-3. | 1-6 |
| A | KR 10-2006-0059503 A (EUN, Hee Back) 02 June 2006<br>See abstract, claims 1-4 and figures 1-2. | 1-6 |
| A | KR 10-2007-0092773 A (ICASH CO., LTD.) 14 September 2007<br>See abstract, claims 1-8 and figures 1-2. | 1-6 |
| A | KR 10-2001-0007957 A (MONEYTEN CO.,LTD) 05 February 2001<br>See abstract, claims 1-15 and figures 1-9. | 1-6 |

☐ Further documents are listed in the continuation of Box C.　　☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 05 FEBRUARY 2015 (05.02.2015) | **05 FEBRUARY 2015 (05.02.2015)** |

| Name and mailing address of the ISA/**KR** | Authorized officer |
|---|---|
| Korean Intellectual Property Office<br>Government Complex-Daejeon, 189 Seonsa-ro, Daejeon 302-701,<br>Republic of Korea<br>Facsimile No. 82-42-472-7140 | Telephone No. |

Form PCT/ISA/210 (second sheet) (July 2009)

INTERNATIONAL SEARCH REPORT
Information on patent family members

International application No.

**PCT/KR2014/009487**

| Patent document cited in search report | Publication date | Patent family member | Publication date |
|---|---|---|---|
| KR 10-2002-0011207 A | 08/02/2002 | NONE | |
| KR 10-2001-0094624 A | 01/11/2001 | NONE | |
| KR 10-2006-0059503 A | 02/06/2006 | NONE | |
| KR 10-2007-0092773 A | 14/09/2007 | NONE | |
| KR 10-2001-0007957 A | 05/02/2001 | NONE | |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 200498608